# EUROPÄISCHE PATENTANMELDUNG

(11) **EP 1 308 262 A1**
(43) Veröffentlichungstag der Anmeldung: **07.05.2003**
(21) Anmeldenummer: 02020362.6
(22) Anmeldetag: 12.09.2002
(51) Int. Cl.: B29C 47/60

(54) **Extrusionsschnecke**

(30) Priorität: 31.10.2001 DE 10153711; 15.01.2002 DE 10201158
(71) Anmelder: Krauss-Maffei Kunststofftechnik GmbH, 80997 München (DE)
(72) Erfinder: Würtele, Martin, 86316 Friedberg (DE)
(74) Vertreter: Zollner, Richard

(57) **Zusammenfassung**

Bei einer Extrusionsschnecke (2) für einen Plastifizierzylinder (4) zur Verarbeitung von thermoplastischen Kunststoffen, mit mindestens einem, sich über eine Misch- und Umwandlungszone erstreckenden Schneckensteg (8), der mit zumindest einer Durchtrittsstelle (10) zur Rückführung des bereits aufgeschmolzenen Kunststoffmaterials zwischen benachbarten Schneckenwindungen versehen ist, wird erfindungsgemäß auf baulich einfache Weise eine hochgradige, rückstaufreie Durchmischung und thermische Homogenisierung des den Schneckenkanal (6) durchsetzenden Massestroms dadurch erreicht, daß der Schneckensteg an der Durchtrittsstelle unterbrochen und auf einer axial in Richtung des Austragsendes der Schnecke versetzten Schraubenlinie fortgeführt ist.

## Beschreibung

Die Erfindung bezieht sich auf eine Extrusionsschnecke nach dem Oberbegriff des Patentanspruchs 1.

Bei Extrusionsschnecken für Kunststoff-Plastifizierzylinder, in deren Umwandlungszone das zumeist granulatförmig eingetragene Kunststoffmaterial unter Wärmeeinwirkung zunehmend aufgeschmolzen wird, so daß der Kunststoffstrom im Schneckenkanal in der Übergangsphase gleichzeitig aus festen und bereits aufgeschmolzenen Masseanteilen besteht, ergibt sich das Problem, daß sich das aufgeschmolzene Material aufgrund der erhöhten Haft- und Reibungsbedingungen vermehrt an die Schubflanke des Schneckenstegs anlegt, während sich die Feststoffanteile an der Passiv- oder Rückseite des Schneckenstegs ansammeln, so daß es zu einer höchst unerwünschten Entmischung von fester und flüssiger Phase kommt, durch die die thermische Homogenisierung und der Aufschmelzprozeß des Kunststoffmaterials erheblich beeinträchtigt werden. Um dem zu begegnen, sind bei den etwa aus der DE 26 22 591 C2, der DE 26 60 469 C2 oder der US 3 652 064 bekannten Extrusionsschnecken der eingangs genannten Art Durchbrüche oder Lücken im Schneckensteg freigehalten, um so das aufgeschmolzene Material von der Schubseite zur Stegrückseite und von dort über das Feststoffbett der vorhergehenden Schneckenwindung zu leiten. Dabei muß der aufgeschmolzenen Masse-Teilstrom jedoch allein unter der Wirkung der Druckdifferenz am Schneckensteg mehrfach quer zur Fließrichtung im Schneckenkanal umgelenkt werden, so daß ein ausreichender Durchmischungseffekt, wenn überhaupt, nur mit einer, bezogen auf die Schneckenwindungen, äußerst kompressionsstarken Extrusionsschnecke und dann auch nur mit einem hohen Leistungsverlust zu erzielen ist. Daher werden, wie aus den genannten Druckschriften ebenfalls bekannt, im Schneckenkanal zumeist zusätzlich Einbauteile in Form von Stiften, Nocken oder Barrierestegen angeordnet, an denen der Massestrom umgelenkt und dann durchmischt wird. Durch derartige Einbauteile aber wird der örtliche Strömungswiderstand des Schneckenkanals beträchtlich erhöht, mit der Folge, daß die Leistungsverluste wiederum stark zunehmen und darüber hinaus die Gefahr besteht, daß sich die Feststoffpartikel an den Einbauteilen stauen und den Schneckenkanal blockieren.

Aufgabe der Erfindung ist es, eine Extrusionsschnecke der eingangs genannten Art so auszubilden, daß auf baulich einfache Weise und mit geringen Leistungseinbußen eine hochgradige Durchmischung des Massestroms im Schneckenkanal erzielt wird.

Diese Aufgabe wird erfindungsgemäß durch die im Patentanspruch 1 gekennzeichnete Extrusionsschnecke gelöst.

Erfindungsgemäß werden die aufgeschmolzenen Kunststoffanteile aufgrund der axial in Richtung des Austragsendes der Schnecke versetzten Steganordnung im Bereich der Durchtrittsstelle im wesentlichen ohne Änderung der Fließrichtung und ohne leistungsmindernde Einbauteile zuverlässig und äußerst strömungsgünstig abgetrennt und in das Feststoffbett der vorhergehenden Kanalwindung zurückgeführt und dadurch eine hochgradige Durchmischung des Massestroms mit sehr geringen Leistungseinbußen erzielt, mit der Besonderheit, daß der Schneckenkanal infolge der beanspruchten Steggeometrie nicht nur von störenden Engstellen freigehalten, sondern auf der Rezirkulationsstrecke sogar entsprechend dem um die Rückführmenge erhöhten Massestrom im Querschnitt verbreitert ist, was ganz wesentlich zu dem deutlich verbesserten, rückstaufreien Massefluß in der Misch- und Umwandlungszone der Extrusionsschnecke beiträgt.

Der Schneckensteg ist an der Durchtrittsstelle axial versetzt fortgeführt, die Fortführung kann jedoch auch in Umfangsrichtung der Schnecke versetzt erfolgen. Insbesondere kann die Fortführung in Umfangsrichtung überlappend, anschließend oder mit einer Aussparung erfolgen (Anspruch 2). Die Gangsteigung der Schraubenlinie kann sich nach der Unterbrechung ändern oder unverändert bleiben (Anspruch 3).

Besonders vorteilhaft ist es jedoch, den Schneckensteg nach der Unterbrechung axial, nicht aber in Umfangsrichtung der Schnecke, versetzt, mit gleicher Gangsteigung weiterzuführen.

Vorzugsweise ist der Schneckensteg gemäß Anspruch 4 mehrfach jeweils im Abstand einiger Schneckenwindungen unterbrochen und axial versetzt fortgeführt, was sich vor allem für Extrusionsschnecken empfiehlt, deren Umwandlungszone sich über eine Vielzahl von Schneckenwindungen erstreckt, um so den Mischvorgang periodisch jeweils nach mehreren Schneckenumläufen zu wiederholen.

Bei einer mehrgängigen Schnecke sind die Durchtrittsstellen benachbarter Schneckenstege in besonders bevorzugter Ausgestaltung nach Anspruch 5 um höchstens eine Schneckenwindung voneinander entfernt, und zwar nach Anspruch 6 zweckmäßigerweise in Axialrichtung fluchtend zueinander angeordnet, also im Abstand genau einer Schneckenwindung. Auf diese Weise sind die Zufuhrstelle der Schmelze auf der Passivseite und die Entnahmestelle auf der Schubseite des jeweiligen Schneckenkanals derart zueinander positioniert, daß die Schmelze kaskadenartig von dem einen in den jeweils anderen Schneckenkanal überführt wird, ohne daß die abgezogene Menge an aufgeschmolzenem Material die Zufuhrmenge örtlich übersteigt und dadurch der Massestrom im Schneckenkanal stellenweise übermäßig stark an Schmelze verarmt.

Aus Gründen einer weiteren Reduzierung des Strömungswiderstandes an der Durchtrittsstelle ist der axial versetzte Stegabschnitt nach Anspruch 7 zweckmäßigerweise mit einer keilförmig ausgebildeten Anströmkante versehen.

Die Erfindung wird nunmehr anhand zweier Ausführungsbeispiele in Verbindung mit den Zeichnungen näher erläutert. Es zeigen in stark schematisierter Darstellung:
- **Fig. 1**: eine ausschnittsweise Ansicht einer eingängigen Extrusionsschnecke nach der Erfindung zusammen mit dem zugehörigen Plastifizierzylinder im Bereich der Misch- und Umwandlungszone; und
- **Fig. 2**: eine der Fig. 1 entsprechende Darstellung eines weiteren Ausführungsbeispiels der Erfindung in Form einer zweigängigen Extrusionsschnecke.

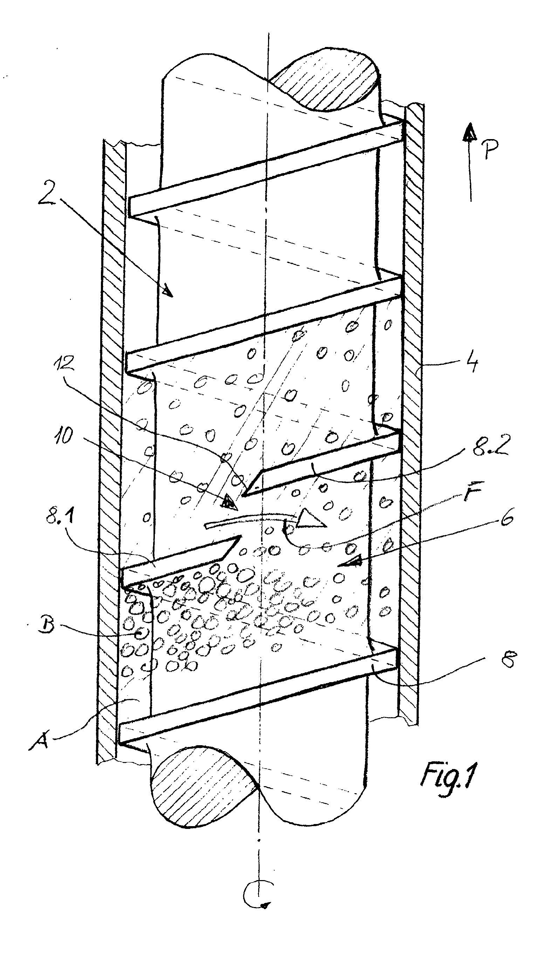

Fig. 1 zeigt eine eingängige Extrusionsschnecke 2 in einem Plastifizierzylinder 4 im Bereich der Umwandlungs- und Mischzone, in welcher das zuvor eingezogene, thermoplastische Kunststoffgranulat unter Wärmeeinwirkung zunehmend aufgeschmolzen und in Pfeilrichtung P zur - nicht gezeigten - Austragszone des Plastifizierzylinders 4 befördert wird.

Beim Passieren der Umwandlungszone besitzt das bereits aufgeschmolzene Kunststoffmaterial aufgrund der höheren Haft- und Reibungseigenschaften die Tendenz, sich im Schneckenkanal 6 vermehrt an der Schubseite des Schneckenstegs 8 anzulagern, während sich das Feststoffmaterial verstärkt an der Rück- oder Passivseite des Schneckenstegs 8 ansammelt, so daß eine Entmischung des Massestroms erfolgt, wie dies schematisch in Fig. 1 durch den Schmelze-Teilstrom A und das Feststoffbett B dargestellt ist. Aufgrund des Entmischungseffekts werden der Wärmeübergang zu den Feststoffpartikeln und die thermische Homogenität des Massestroms erheblich beeinträchtigt.

Um dies zu verhindern, ist der Schneckensteg 8 örtlich unterbrochen und in Axialrichtung der Schnecke versetzt auf einer Schraubenlinie gleicher Steigung und Gangrichtung fortgeführt. Zwischen den Stegabschnitten 8.1 und 8.2 entsteht somit eine Durchtrittsstelle 10, an der das aufgeschmolzene Kunststoffmaterial im wesentlichen unter Beibehalt der Fließrichtung im Schneckenkanal 8 abgetrennt und in die vorhergehende Schneckenwindung zurückgeführt wird, wo es dem Feststoffbett B auf der Rückseite des Schneckenstegs 8 zugemischt wird. Aufgrund der versetzten Steggeometrie ist der Schneckenkanal 6 längs der die Rezirkulationsstrecke bildenden Kanalwindung im Querschnitt verbreitert, so daß das Feststoffbett B beim Einströmen in den erweiterten Kanalabschnitt aufgebrochen wird und sich die an der Durchtrittsstelle 10 in Pfeilrichtung F abgezogene Schmelze über die Feststoffpartikel ergießt. Dies garantiert eine hochgradige, rückstaufreie Durchmischung der festen und flüssigen Masse-Teilströme A, B. Im Hinblick auf eine weitere Verringerung des Strömungswiderstandes an der Durchtrittsstelle 10 ist die Anströmkante 12 des Stegabschnitts 8.2 keilförmig ausgebildet.

Um den Mischzustand des Massestroms über die gesamte Umwandlungszone aufrechtzuerhalten, können im Schneckensteg 8 jeweils im Abstand einiger Schneckenwindungen zusätzliche, gleichartig gestaltete Durchtrittsstellen 10 angeordnet sein.

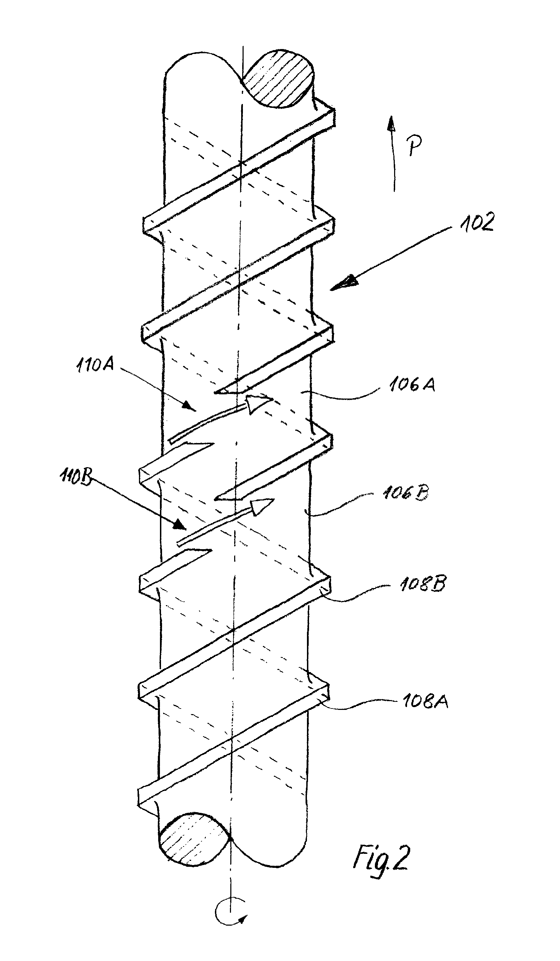

Fig. 2, wo die dem ersten Ausführungsbeispiel entsprechenden Bauelemente durch ein um 100 erhöhtes Bezugszeichen gekennzeichnet sind, zeigt eine der Fig. 1 entsprechende Darstellung einer zweigängigen Schnecke 102, deren Schneckenkanäle 106A, 106B über Durchtrittsstellen 110A, 110B örtlich miteinander in Verbindung stehen. Die Durchtrittsstellen 110 sind wiederum in der Weise ausgebildet, daß der Schneckensteg 108A bzw. 108B unterbrochen und auf einer in Richtung des Schnecken-Ausstoßendes axial versetzten Schraubenlinie mit gleicher Gangrichtung und -steigung fortgeführt ist, wobei die beiden Durchtrittsstellen 110A und 110B in Schnecken-Längsrichtung fluchtend zueinander ausgerichtet sind.

An der Durchtrittsstelle 110B wird die Schmelze von der Schubseite des Schneckenkanals 106A abgezogen und dem Feststoffbett des Massestroms im Schneckenkanal 106B zugemischt. Der so um den rezirkulierten Schmelzeanteil erhöhte Massestrom gelangt nach einer Kanalwindung in dem nunmehr erweiterten Abschnitt des Schneckenkanals 106B zur Durchtrittsstelle 110A, wo die schubstegseitig angelagerte Schmelzeschicht abgetrennt und mit dem Feststoffbett des den Schneckenkanal 106A durchsetzenden Massestroms durchmischt wird. Wie ersichtlich, ändert sich auch hier wieder aufgrund des axialen Stegversatzes die Querschnittsbreite der Schneckenkanäle 106A, B im Bereich der Mischzone entsprechend dem örtlich zu- bzw. abgeführten Schmelze-Teilstrom, so daß in Verbindung mit der kaskadenartigen, strömungsgünstigen Rückführung der schubstegseitigen Schmelzeschichten wiederum eine hochgradige, rückstaufreie Durchmischung der festen und aufgeschmolzenen Materialanteile in beiden Schneckenkanälen 106A, B mit äußerst geringen Leistungsverlusten erzielt wird.

## Patentansprüche

1. Extrusionsschnecke zur Verarbeitung von Kunststoffen, insbesondere für den Plastifizierzylinder einer Spritzgießmaschine, mit mindestens einem sich über eine Misch- und Umwandlungszone zum Plastifizieren und eine daran anschließende Austragszone zum Ausstoßen des Kunststoffmaterials erstreckenden Schneckensteg, der in der Misch- und Umwandlungszone mit zumindest einer Durchtrittsstelle zur Rückführung eines Masse-Teilstroms zur benachbarten Schneckenwindung versehen ist,
**dadurch gekennzeichnet, daß**
die Durchtrittsstelle (10; 110) in der Weise ausgebildet ist, daß der Schneckensteg (8; 108) im Bereich der Durchtrittsstelle unterbrochen und auf einer axial in Richtung des Austragsendes der Schnecke (2; 102) versetzten Schraubenlinie gleicher Gangrichtung fortgeführt ist.

2. Extrusionsschnecke nach Anspruch 1,
**dadurch gekennzeichnet, daß**
die Fortsetzung des Schneckenstegs (8; 108) in Umfangsrichtung der Schnecke (2; 102) versetzt, insbesondere bezüglich der Umfangsrichtung überlappend, anschließend oder mit einer Aussparung erfolgt.

3. Extrusionsschnecke nach Anspruch 1 oder 2,
**dadurch gekennzeichnet, daß**
der Schneckensteg (8; 108) auf der axial in Richtung des Austragsendes der Schnecke (2; 102) versetzten Schraubenlinie mit gleicher oder unterschiedlicher Gangsteigung fortgeführt ist.

4. Extrusionsschnecke nach einem der Ansprüche 1 bis 3,
**dadurch gekennzeichnet, daß**
der Schneckensteg (8; 108) jeweils im Abstand mehrerer Schneckenwindungen unterbrochen und axial versetzt fortgeführt ist.

5. Extrusionsschnecke nach einem der Ansprüche 1 bis 4, mit mehreren Schneckengängen,
**dadurch gekennzeichnet, daß**
die axial versetzten Stegabschnitte benachbarter Schneckenstege (108A, 108B) um höchstens eine Schneckenwindung voneinander beabstandet sind.

6. Extrusionsschnecke nach Anspruch 5,
**dadurch gekennzeichnet, daß**
die axial versetzten Stegabschnitte benachbarter Schneckenstege (108A, 108B) in Schnecken-Längsrichtung fluchtend zueinander angeordnet sind.

7. Extrusionsschnecke nach einem der vorhergehenden Ansprüche,
**dadurch gekennzeichnet, daß**
der axial versetzte Stegabschnitt (8.2) mit einer keilförmig ausgebildeten Anströmkante (12) versehen ist.
